# EUROPÄISCHE PATENTANMELDUNG

(11) **EP 4 099 530 A1**
(43) Veröffentlichungstag der Anmeldung: **07.12.2022**
(21) Anmeldenummer: 21177492.2
(22) Anmeldetag: 02.06.2021
(51) Int. Cl.: H02G 11/00, B60L 53/31, H02G 3/04

(54) **LADESÄULE MIT EINEM KABELHALTER FÜR DAS LADEKABEL**

(71) Anmelder: ads-tec Energy GmbH, 72622 Nürtingen (DE)
(72) Erfinder: SPEIDEL, Thomas, 71706 Markgrönningen (DE); GREIF, Andreas, 73235 Weilheim/Teck (DE)
(74) Vertreter: Karzel, Philipp

(57) **Zusammenfassung**

Die Erfindung betrifft eine Ladesäule mit einem Ladekabel (2) zur Verbindung mit einem mobilen Energiespeicher, wobei die Ladesäule (1) ein Gehäuse (3) aufweist und das Ladekabel (2) über zumindest einen Kabelauslass (5) aus dem Gehäuse (3) der Ladesäule (1) nach außen geführt ist und mit einem Ladestecker (4) endet. Zur Erzielung einer großen Reichweite ist vorgesehen, an dem Gehäuse (3) zumindest einen Träger (10) für zumindest einen Kabelhalter (20) vorzusehen, der um eine aufrechte Verschwenkachse (11) an dem Träger (10) gehalten ist. Der Kabelhalter (20) weist eine Länge (K) auf, die geringer als die Länge (L) des aus dem Kabelauslass (5) bis zum Ladestecker (4) sich erstreckenden Ladekabels (2) ist. Der Kabelhalter (20) ist steif ausgebildet, derart, dass das Ladekabel (2) durch den Kabelhalter (20) in einem Ladekabelabschnitt (L1) zwangsgeführt und versteift ist.

## Beschreibung

Die Erfindung betrifft eine Ladesäule mit einem Ladekabel zur Verbindung mit einem mobilen Energiespeicher. Die Ladesäule weist ein Gehäuse auf, aus dem das Ladekabel über einen Kabelauslass nach außen geführt ist und mit einem Ladestecker endet.

Derartige Ladesäulen stehen mit einem Sockelabschnitt auf einem Fundament auf, wobei der Kabelauslass auf einer Seitenfläche der Ladesäule in Richtung auf den Sockelabschnitt orientiert ist. Das aus dem Gehäuse der Ladesäule geführte Ladekabel verläuft somit vom Kabelauslass zunächst nach unten in Richtung Boden, wobei in der Parkstellung der Ladestecker etwa auf halber Höhe der Ladesäule in einer Aufnahme des Gehäuses gehalten ist.

Fährt ein Benutzer mit einem elektrisch betriebenen Kraftfahrzeug an die Ladesäule heran, hat er darauf zu achten, dass die Ladebuchse am Kraftfahrzeug zur Ladesäule hin orientiert ist, um den aus der Aufnahme des Gehäuses entnommenen Ladestecker in die Ladebuchse einzustecken. Der Abstand zwischen dem Kraftfahrzeug und der Ladesäule wird durch das flexible Ladekabel überbrückt, wobei dieses meist auf dem Boden aufliegt und verschmutzt.

Liegt die Ladebuchse des Kraftfahrzeugs der Ladesäule abgewandt, muss das Ladekabel um das Fahrzeug herumgeführt oder über das Fahrzeugdach geführt werden. Dies ist nur mit entsprechend langen Ladekabeln möglich. Ein langes Ladekabel führt dazu, dass bei kurzen Abständen zwischen der Ladesäule und der Ladebuchse am Kraftfahrzeug ein wesentlicher Abschnitt des Ladekabels auf dem Boden aufliegt.

Der Erfindung liegt die Aufgabe zugrunde, bei Gewährleistung einer großen Reichweite durch ein langes Ladekabel zugleich zu gewährleisten, dass das Ladekabel in einer Parkposition an der Ladesäule und/oder in einer Betriebsstellung Auflage des Ladekabels auf dem Boden reduziert ist.

Die Aufgabe wird nach der Lehre des Anspruchs 1 dadurch gelöst, dass am Gehäuse der Ladesäule ein Träger für einen Kabelhalter angeordnet ist, wobei der Kabelhalter um eine aufrechte Verschwenkachse verschwenkbar an dem Träger gehalten ist. Der Kabelhalter weist eine Länge auf, die geringer ist als die Länge des aus dem Kabelauslass bis zum Ladestecker sich erstreckenden Ladekabels. Das Ladekabel ist durch den Kabelhalter in einem Ladekabelabschnitt vom Kabelauslass bis zum Ende des Kabelhalters zwangsgeführt. Der Kabelhalter ist derart steif ausgebildet, dass er in dem Ladekabelabschnitt etwa vom Kabelauslass bis zum Ende des Kabelhalters den geführten Ladekabelabschnitt versteift. Die Versteifung des Ladekabelabschnitts wird insbesondere durch eine Anbindung des Ladekabelabschnitts an den vorzugsweise starr ausgebildeten Kabelhalter erzielt.

In Weiterbildung der Erfindung ist der Kabelauslass selbst als Träger für den Kabelhalter ausgebildet. Das aus dem Kabelauslass austretende Ladekabel kann so direkt vom Kabelhalter aufgenommen werden.

Die Ladesäule steht insbesondere senkrecht auf einem Boden, einem Fundament oder dergleichen Fläche auf. Der an der Ladesäule gehaltene Kabelhalter weist ein erstes Ende und ein zweites Ende auf. Das erste Ende des Kabelhalters ist um die aufrechte Verschwenkachse des insbesondere an der Ladesäule gehaltenen Trägers schwenkbar gehalten. Die aufrechte Verschwenkachse ist eine im Wesentlichen senkrecht orientierte Achse, vorzugsweise eine senkrechte Achse. Bezogen auf der Aufstandsfläche der Ladesäule ist deren Hochachse eine senkrechte Achse. Die aufrechte Verschwenkachse liegt vorzugsweise parallel zur Hochachse der Ladesäule.

Die Anordnung des Kabelhalters ist derart vorgesehen, dass sein erstes Ende auf einem ersten Höhenniveau liegt. Ein anderes, zweites Ende des Kabelhalters liegt auf einem zweiten Höhenniveau. Die Anordnung des Kabelhalters an der Ladesäule ist so vorgesehen, dass das erste Ende auf einem höheren Höhenniveau liegt als das zweite Ende. Dies bedeutet, dass das erste Höhenniveau einen größeren Abstand zur Aufstandsfläche der Ladesäule aufweist als das zweite Höhenniveau.

In besonderer Ausgestaltung der Erfindung weist der Kabelhalter über seine Länge eine bogenförmige Gestalt auf. Die Öffnung des Bogens liegt der Aufstandsfläche der Ladesäule zugewandt. Insbesondere hat der Kabelhalter über seine Länge eine C-förmige Gestalt.

Vorzugsweise ist der Kabelhalter ein Kabelrohr, insbesondere ein starres Kabelrohr. Das Ladekabel erstreckt sich aus dem Kabelauslass kommend durch den Träger in das erste Ende des Kabelrohrs und tritt am zweiten Ende des Kabelrohrs aus. Zweckmäßig ist das Kabelrohr über seinen gesamten Umfang geschlossen, sodass das Ladekabel in einem vom Kabelauslass bis zum zweiten Ende des Kabelrohrs geschlossenen Führungskanal verläuft. Das Kabelrohr kann aus Kunststoff, einer Gusslegierung, einem Metall oder dergleichen Material bestehen. Unabhängig von dem verwendeten Material weist das Kabelrohr eine größere Steifigkeit auf als das Ladekabel selbst. Das Ladekabel wird somit in dem Ladekabelabschnitt zwischen dem Kabelauslass bis zum Ende des Kabelrohrs durch dieses versteift. Für ein starres Kabelrohr eignen sich Materialien wie glasfaserverstärkter Kunststoff, Metall oder dergleichen.

Die Ladesäule weist einen auf einer Aufstandsfläche aufstehenden Sockelabschnitt und einen mit Abstand zum Sockelabschnitt liegenden Dachabschnitt auf. Der Kabelauslass mit dem Träger liegt näher am Dachabschnitt als am Sockelabschnitt des Gehäuses. Insbesondere liegt der Kabelauslass mit einem geringen Abstand zum Dachabschnitt. Der Kabelauslass hat ferner eine Auslassöffnung. Die Auslassöffnung ist derart orientiert, dass sie dem Dachabschnitt der Ladesäule zugewandt liegt. Das Ladekabel tritt aus dem Kabelauslass in einer aufrechten Richtung nach oben aus, vorzugsweise nach oben zum Dachabschnitt.

Das Ladekabel wird am ersten Ende des Kabelhalters, insbesondere des Kabelrohrs, aus der Auslassöffnung des Kabelauslass kommend, zunächst in eine Richtung nach oben geführt um dann - der bogenförmigen Gestalt des Kabelhalters folgend - in Richtung zum Sockelabschnitt der Ladesäule zwangsgeführt umgelenkt zu werden. Der nach oben zum Dachabschnitt der Ladesäule verlaufende, aufrechte Abschnitt des Ladekabels liegt auf der Verschwenkachse des Trägers.

In einer ersten Ausführungsform liegt der Kabelauslass mit dem Träger für den Kabelhalter auf der Längsmittelachse einer Seitenwand des Gehäuses. Die Längsmittelachse der Seitenwand liegt vorzugsweise parallel mit der insbesondere senkrechten Hochachse des Gehäuses der Ladesäule. Aufgrund der Verschwenkbarkeit des Kabelhalters um die aufrechte, insbesondere senkrechte Verschwenkachse des Trägers hat das Ladekabel zu beiden Seiten der Ladesäule eine gleiche Reichweite. Der Kabelauslass ist mit seiner Auslassöffnung zum Dachabschnitt orientiert.

In einer weiteren Ausführungsform der Erfindung liegt der Kabelauslass mit dem Träger für den Kabelhalter in einer oberen Ecke einer Gehäusewand des Gehäuses. Der Kabelauslass ist mit seiner Auslassöffnung zum Dachabschnitt orientiert. Aufgrund der Anordnung in einer oberen Ecke der Gehäusewand liegt die aufrechte Verschwenkachse näher zu einer ersten seitlichen Außenwand als zu einer zweiten seitlichen Außenwand. Die seitlichen Außenwände liegen zueinander insbesondere parallel. Die Anordnung gewährleistet im Bereich der ersten seitlichen Außenwand eine größere Reichweite für das Ladekabel als auf der anderen, zweiten seitlichen Außenwand.

Vorteilhaft ist die Lage des Kabelauslass mit der aufrechten Verschwenkachse derart vorgesehen, dass der Kabelhalter, insbesondere ein Kabelrohr, um bis zu 180° um die aufrechte Achse des Trägers am Kabelauslass verschwenkbar ist. Ist auf einer Gehäusewand der Ladesäule, vorzugsweise einer Frontseite der Ladesäule, nur ein Kabelauslass für ein Ladekabel vorgesehen und nur ein um eine aufrechte Achse verschwenkbarer Kabelhalter angeordnet, kann dieser um 180° um die aufrechte Verschwenkachse verschwenkt werden. Sind auf einer Seitenwand der Ladesäule, vorzugsweise auf einer Frontseite der Ladesäule, zwei Kabelauslässe mit zwei Kabelhaltern angeordnet, die jeweils um eine aufrechte Verschwenkachse verschwenkbar sind, ist der Drehwinkel der Kabelhalter abhängig von der jeweiligen Betriebslage des anderen Kabelhalters. Liegt ein Ladekabel in seiner Parkstellung, in der der Kabelhalter zweckmäßig an der Gehäusewand der Ladesäule anliegt, kann ein zweiter Kabelhalter mit einem Ladekabel um bis zu 180° verschwenkt werden. Sind beide Kabelhalter in einer Betriebsstellung, ist der Schwenkbereich eines Kabelhalters abhängig von der Betriebslage des anderen Kabelhalters. In jedem Fall ist gewährleistet, dass der Ladestecker eines Ladekabels in einem Umfangsbereich von 180° um die Frontseite der Ladesäule in eine Ladebuchse eines mobilen Energiespeichers eingesteckt werden kann.

In bevorzugter Weiterbildung der Erfindung ist vorgesehen, dass jeder Kabelhalter eine Parkstellung und mehrere Betriebsstellungen aufweist. Dabei kann die Anordnung so getroffen sein, dass der Kabelhalter in der Parkstellung nicht über die Außenkontur des Gehäuses übersteht. Die Außenwände des Gehäuses sind die Seitenflächen der Ladesäule, die die Ladesäule seitlich begrenzen und an die die den Kabelauslass aufweisende Gehäusewand des Gehäuses, insbesondere die Frontseite des Gehäuses, angrenzen.

Es kann auch eine Ausbildung zweckmäßig sein, bei der in den Betriebsstellungen des Kabelhalters dieser nicht über die Außenseiten des Gehäuses der Ladesäule vorsteht.

Auf einer Gehäusewand der Ladesäule, insbesondere auf der Frontseite der Ladesäule, können zweckmäßig mehrere Kabelauslässe, insbesondere zwei Kabelauslässe, vorgesehen sein. Insbesondere liegen die mehreren Kabelauslässe auf einer Gehäusewand der Ladesäule auf einem gemeinsamen Höhenniveau.

Bei der Anordnung mehrerer Kabelauslässe mit Kabelhalter auf einer Gehäusewand der Ladesäule kann es aus Platzgründen vorteilhaft sein, dass die Kabelhalter in ihren Parkstellungen einander überlappen.

Vorteilhaft ist die Länge des Kabelhalters derart ausgeführt, dass der vom Kabelhalter zwangsgeführte und versteifte Ladekabelabschnitt 20 % bis zu 70 %, insbesondere 50 % der zwischen dem Kabelauslass und dem Ladestecker sich erstreckenden gesamte Länge des Ladekabels beträgt. Die vom Kabelhalter nicht fixierte freie Restlänge des Ladekabels ermöglicht eine flexible Führung des Ladekabels zu einer Ladebuchse des mobilen Energiespeichers.

Es kann zweckmäßig sein, den Träger am Kabelauslass als Drehgelenk auszubilden. Das Drehgelenk, der Träger und der Kabelauslass können zweckmäßig einteilig ausgeführt sein. Das Drehgelenk kann fest mit dem Kabelhalter verbunden sein.

Weitere Merkmale der Erfindung ergeben sich aus den weiteren Ansprüchen, der Beschreibung und den Zeichnungen, in denen nachfolgend im Einzelnen beschriebene Ausführungsbeispiele der Erfindung dargestellt sind. Die Merkmale der Ansprüche, die in der Beschreibung genannten Merkmale sowie die in den Zeichnungen offenbarten Merkmale können unabhängig voneinander kombiniert werden. Dabei sind auch Merkmalskombinationen vorgesehen, die Merkmale verschiedener Ausführungsbeispiele zusammenführen.

Die Zeichnungen zeigen:
- Fig. 1: eine Ansicht einer Gehäusewand der Ladesäule mit einem mittig angeordneten Kabelhalter in einer Parkstellung,
- Fig. 2: eine Ansicht auf die Gehäusewand der Ladesäule nach Fig. 1 in einer Betriebsstellung,
- Fig. 3: eine perspektivische Ansicht auf eine Ladesäule mit einem mittigen Kabelauslass und einer Mehrzahl von Betriebsstellungen,
- Fig. 4: eine Draufsicht auf die Ladesäule nach Fig. 3 mit schematischer Darstellung der Reichweite des mit einem Kabelhalter geführten Ladekabels,
- Fig. 5: eine perspektivische Ansicht einer Ladesäule mit einem in einer Ecke einer Gehäusewand vorgesehenen Kabelauslass mit einem Träger für einen Kabelhalter in einer Parkstellung,
- Fig. 6: eine perspektivische Ansicht einer Ladesäule nach Fig. 5 mit einem Kabelhalter in einer Betriebsstellung,
- Fig. 7: eine perspektivische Darstellung einer Ladesäule nach Fig. 5 in einer weiteren Betriebsstellung,
- Fig. 8: eine Draufsicht auf die Ladesäule nach Fig. 5 mit Darstellung der Reichweite des mit einem Kabelhalter geführten Ladekabels bei Anordnung des Kabelauslasses in einer Ecke der Gehäusewand,
- Fig. 9: eine Darstellung einer Ladesäule mit einem auf der vorderen Gehäusewand mittig angeordneten Kabelauslass mit einem Kabelhalter sowie mit einem auf der Rückwand mittig angeordneten weiteren Kabelauslass mit einem weiteren Kabelhalter,
- Fig. 10: eine Darstellung einer Ladesäule mit einem auf der vorderen Gehäusewand in jeweils einer oberen Ecke vorgesehenen Kabelauslass mit je einem angeordneten Kabelhalter in einer Parkstellung,
- Fig. 11: eine perspektivische Darstellung einer Ladesäule mit einem auf deren vorderer Gehäusewand in jeweils einer oberen Ecke vorgesehenen Kabelauslass und je einem angeordneten Kabelhalter in einer Parkstellung,
- Fig. 12: eine Draufsicht auf eine Ladesäule nach Fig. 10 oder Fig. 11 mit Darstellung der Reichweite des Ladekabels,
- Fig. 13: eine Frontansicht auf eine Ladesäule mit auf gegenüberliegenden Seiten einer Längsmittelachse der Frontseite nebeneinander angeordneten Kabelauslässen mit Kabelhaltern in einer Parkstellung und mit schematischer Darstellung eines Benutzers zur Visualisierung der Größenverhältnisse,
- Fig. 14: eine perspektivische Darstellung der Ladesäule nach Fig. 13 mit Kabelhaltern in Parkstellung,
- Fig. 15: eine perspektivische Darstellung der Ladesäule nach Fig. 14 mit einem Kabelhalter in Betriebsstellung und einem Kabelhalter in Parkstellung,
- Fig. 16: eine Draufsicht auf die Ladesäule nach Fig. 13 mit Darstellung der Reichweite der Ladekabel,
- Fig. 17: eine perspektivische Ansicht auf eine Ladesäule mit auf gegenüberliegenden Seiten einer Längsmittelachse der Frontseite nebeneinander angeordneten Kabelauslässen mit zwei Kabelhaltern in Parkstellung,
- Fig. 18: eine perspektivische Ansicht auf die Ladesäule nach Fig. 17 mit einem Ladekabel in Betriebsstellung und einem Ladekabel in Parkstellung,
- Fig. 19: eine perspektivische Ansicht auf die Ladesäule nach Fig. 17 mit zwei in Betriebsstellung dargestellten Ladekabeln,
- Fig. 20: eine Draufsicht auf die Ladesäule nach Fig. 19 mit Darstellung der Reichweite der einzelnen Ladekabel.

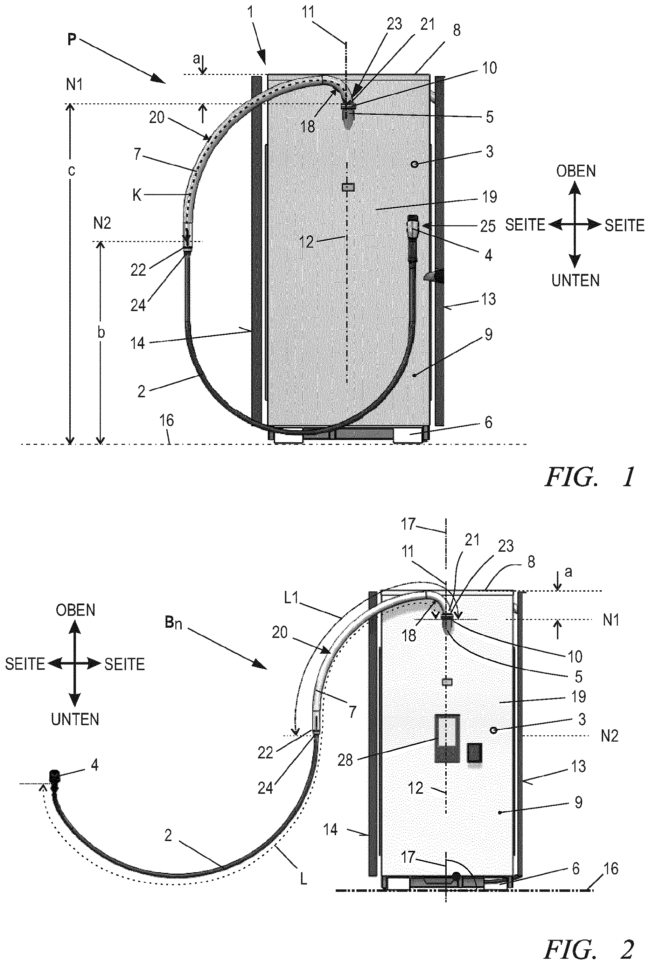

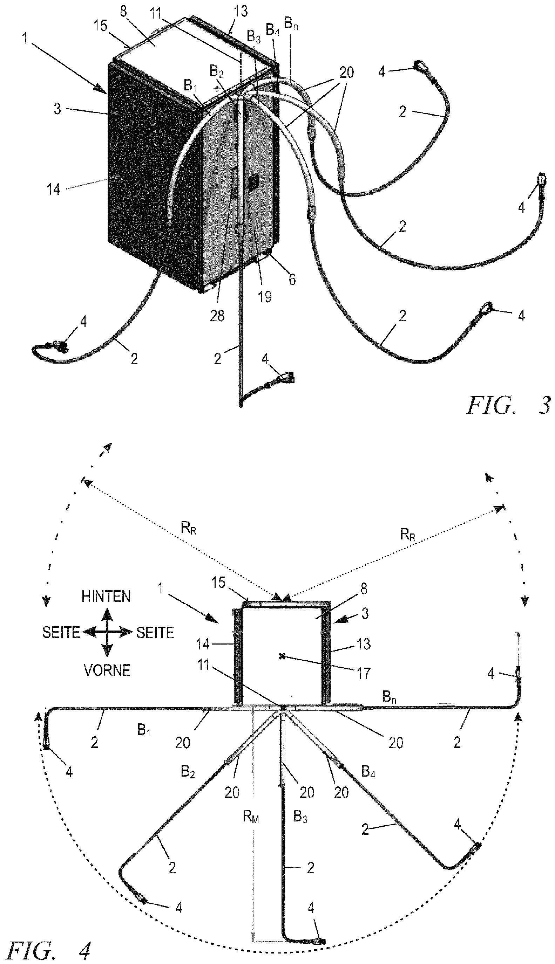

In Fig. 1 ist eine Ladesäule 1 mit einem Ladekabel 2 gezeigt, wobei das Ladekabel 2 mit einem Ladestecker 4 endet. Die Ladesäule 1 hat ein Gehäuse 3 mit einem Sockelabschnitt 6 und einem Dachabschnitt 8. Das Gehäuse 3 der Ladesäule 1 hat eine vordere Gehäusewand 19, die vorzugsweise als Frontwand 9 ausgebildet ist. An die vordere Gehäusewand 19 schließen insbesondere an deren Längsseiten Außenwände 13 und 14 an, die im Wesentlichen winklig, insbesondere rechtwinklig zu der vorderen Gehäusewand 19 liegen. Das Gehäuse 3 wird abgeschlossen durch eine Rückwand 15 (Fig. 3).

Der Sockelabschnitt 6 der Ladesäule 1 steht auf einem Boden 16 auf. Der Boden 16 kann insbesondere als Fundament für die Ladesäule 1 ausgebildet sein. Die Ladesäule 1 hat eine Hochachse 17, die zum Boden 16 insbesondere als Senkrechte oder Lotrechte ausgerichtet ist (Fig. 2).

Das Gehäuse 3 weist einen Kabelauslass 5 auf, der vorzugsweise auf der vorderen Gehäusewand 19 der Ladesäule 1 angeordnet ist. Es kann zweckmäßig sein, den Kabelauslass 5 alternativ oder zusätzlich auf einer Außenwand 13 bzw. 14, auf der Rückwand 15 oder im Dachabschnitt 8 auszubilden.

Im gezeigten Ausführungsbeispiel nach den Fig. 1 bis Fig. 4 ist der Kabelauslass 5 nahe dem oberen Ende des Gehäuses 3 vorgesehen. Der Kabelauslass 5 liegt mit einem Abstand a unterhalb des Dachabschnitts 8 in der vorderen Gehäusewand 19. Über den Kabelauslass 5 ist das Ladekabel 2 aus dem Gehäuse 3 nach außen geführt.

Der Kabelauslass 5 liegt mit seiner Auslassöffnung 23 dem Dachabschnitt 8 der Ladesäule 1 zugewandt. Das Ladekabel 2 ist in Richtung auf den Dachabschnitt 8 aus dem Kabelauslass 5 herausgeführt.

Das Gehäuse 3 der Ladesäule 1 weist einen Träger 10 für einen Kabelhalter 20 auf. Vorteilhaft ist der Kabelhalter 20 um eine aufrechte Achse verschwenkbar an dem Träger 10 gehalten. Die aufrechte Achse ist insbesondere eine Verschwenkachse 11, die vorzugsweise lotrecht zur Aufstandsfläche der Ladesäule 1 auf dem Boden 16 ausgerichtet liegt. In zweckmäßiger Ausbildung ist der Träger 10 als Drehgelenk ausgebildet. Das Drehgelenk bildet die Verschwenkachse 11.

Der Kabelhalter 20 hat eine Länge K. Die Länge K des Kabelhalters 20 ist geringer als die Länge L des aus dem Kabelauslass 5 bis zum Ladestecker 4 sich erstreckenden Ladekabels 2. Ein Ladekabelabschnitt L1 wird von dem Kabelhalter 20 gehalten. Der Ladekabelabschnitt L1 des Ladekabels 2 ist an dem Kabelhalter 20 vorzugsweise zwangsgeführt. Der Kabelhalter 20 selbst ist zweckmäßig steif ausgebildet. Durch den steifen Kabelhalter 20 ist der am Kabelhalter 20 zwangsgeführte Ladekabelabschnitt L1 versteift.

Vorteilhaft ist die Ausbildung so getroffen, dass der am Kabelhalter 20 zwangsgeführte Ladekabelabschnitt L1 20 % bis zu 70 %, insbesondere 30 bis 60 %, vorzugsweise 50 % der zwischen dem Kabelauslass 5 und dem Ladestecker 4 sich erstreckenden Gesamtlänge L des Ladekabels 2 beträgt. Der am Kabelhalter 20 zwangsgeführte Ladekabelabschnitt L1 ist durch den Kabelhalter 20 versteift. Das an sich hoch flexible Ladekabel 2 ist somit im Bereich des Ladekabelabschnitts L1 durch den Kabelhalter 20 steif. Durch die Zwangsführung des Ladekabelabschnitts 1 am Kabelhalter 20 ist die Flexibilität des Ladekabelabschnitts L1 aufgehoben. Der Ladekabelabschnitt L1 hat gegenüber der Restlänge des Ladekabelabschnitts zwischen dem Ende 22 des Kabelhalters 20 und dem Ladestecker 4 eine signifikant geringere Flexibilität.

Die Anordnung ist vorteilhaft so vorgesehen, dass der am Träger 10 verschwenkbar gehaltene Kabelhalter 20 das Ladekabel 2 in Richtung auf den Sockelabschnitt 6 der Ladesäule 1 umlenkt. Innerhalb des Abstands a der Auslassöffnung 23 des Kabelauslass 5 zum Dachabschnitt ist das Ladekabel 2 in einem Bogen 18 von etwa 90° umgelenkt. Der Abstand a ist zweckmäßig so bemessen, dass der Kabelhalter 20 mit dem umgelenkten Ladekabelabschnitt nicht über den Dachabschnitt 8 der Ladesäule 1 übersteht.

Der Kabelhalter 20 weist ein erstes Ende 21 und ein zweites Ende 22 auf. Wie insbesondere Fig. 1 zeigt, hat der Kabelhalter 20 über seine Länge K eine gebogene Gestalt, insbesondere ist der Kabelhalter 20 C-förmig gebogen. Die Anordnung des Kabelhalters 20 an der Ladesäule 1 ist derart vorgesehen, dass sein erstes, am Träger 10 verschwenkbar gehaltene Ende 21 auf einem ersten Höhenniveau N1 und sein zweites Ende 22 auf einem zweiten Höhenniveau N2 liegt. Das zweite Höhenniveau N2 liegt niedriger als das erste Höhenniveau N1. Der Abstand b des zweiten Höhenniveaus N2 zum Boden 16 ist kleiner als der Abstand c des ersten Höhenniveau N1 zum Boden 16.

Vorteilhaft ist die Länge des sich vom freien Ende 22 des Kabelhalters 20 bis zum Ladestecker 4 erstreckenden flexiblen Ladekabelabschnitts des Ladekabels 2 derart bemessen, dass zumindest in der Parkstellung P das Ladekabel 2 den Boden 16 nicht berührt. Der Ladestecker 4 des Ladekabels 2 ist in den Steckerhalter 25 eingehängt, sodass der freie, flexible Ladekabelabschnitt vom Ladestecker 4 in einem U-förmigen Bogen zum Ende 22 des Kabelhalters 20 verläuft. Wie Fig. 1 zeigt, kann bei einer derartigen Anordnung ein Bodenkontakt des freien Ladekabelabschnittes vermieden werden.

Vorteilhaft ist der Kabelhalter 20 als Kabelrohr 7 ausgebildet, durch welches das Ladekabel 2 hindurchgeführt ist. Das Kabelrohr 7 ist als steifes Kabelrohr vorgesehen, insbesondere als starres Kabelrohr 7 ausgebildet. Der am zweiten Ende 22 vorgesehene Auslass 24 des Kabelrohrs 7 liegt dem Boden 16 zugewandt, auf dem die Ladesäule 1 steht. Der Auslass 24 des Kabelrohrs ist zum Sockelabschnitt 6 der Ladesäule 1 orientiert.

Im Ausführungsbeispiel nach den Fig. 1 bis Fig. 4 ist in der vorderen Gehäusewand 19 der Ladesäule 1, die vorzugsweise als Frontwand 9 ausgebildet ist, ein Bedienterminal 28 eingelassen. Über das Bedienterminal 28 wird die Ladesäule 1 von einem Benutzer bedient.

Der Kabelauslass 5 ist im Ausführungsbeispiel nach den Fig. 1 bis Fig. 4 mittig auf einer Gehäusewand der Ladesäule 1, insbesondere der vorderen Gehäusewand 19 vorgesehen. Wie in den Figuren 1 und 2 gezeigt, liegt der Kabelauslass 5 auf der Längsmittelachse 12 der Gehäusewand der Ladesäule 1. Zweckmäßig liegt die aufrechte Verschwenkachse 11 auf der Längsmittelachse 12 der Gehäusewand 19. Der Kabelhalter 20, insbesondere das Kabelrohr 7, gewährleistet einerseits eine Zwangsführung des Ladekabels 2 in einem ersten an den Kabelauslass 5 anschließenden Ladekabelabschnitt L1 in einem festgelegten Höhenbereich und gewährleistet durch die Verschwenkbarkeit des Kabelhalters 20 um die Verschwenkachse 11 um bis zu 180° eine große Reichweite des Ladekabels unter weitgehender Vermeidung eines Kontaktes mit dem Boden 16. Die möglichen Betriebsstellungen B₁, B₂, B₃, B₄ ... Bₙ des Kabelhalters 20 sind in den Fig. 3 und Fig. 4 wiedergegeben. Das Ladekabel 2 bzw. der Ladestecker 4 kann innerhalb eines Halbkreises mit dem Radius R_{M} an einem mobilen Energiespeicher, beispielsweise an die Ladebuchse eines Kraftfahrzeuges, angeschlossen werden. Dies gewährleistet eine hohe Positionsfreiheit eines die Ladesäule 1 anfahrenden Kraftfahrzeugs.

In der Darstellung nach Fig. 1 ist der Kabelhalter 20 und das Ladekabel 2 in einer Parkstellung P gezeigt. In der Parkstellung P ist der Ladestecker 4 am Ende des Ladekabels 2 in einem Steckerhalter 25 der Ladesäule 1 sicher gehalten. Der Steckerhalter 25 liegt vorzugsweise auf dem Höhenniveau N2 des Endes 22 des Kabelhalters 20. Insbesondere endet der Kabelhalter 20 im Bereich der einen Außenwand 14 des Gehäuses 3 der Ladesäule 1. Der Steckerhalter 25 liegt im Bereich der anderen, gegenüberliegenden Außenwand 13 des Gehäuses 3.

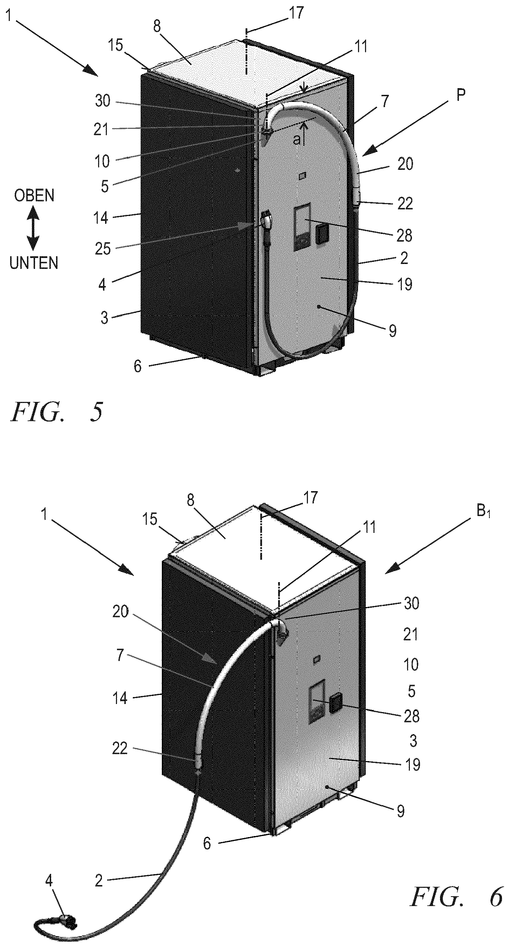

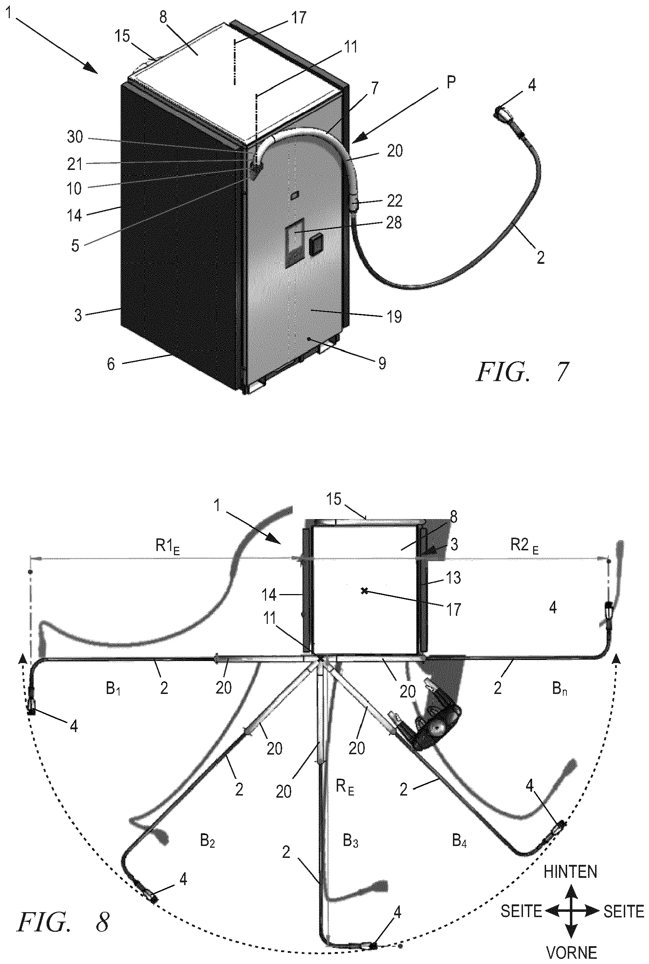

Im Ausführungsbeispiel nach den Fig. 5 bis Fig. 8 ist der Kabelhalter 20 ebenfalls in einer Parkstellung P an der Frontwand 9 der Ladesäule 1 dargestellt. Im Unterschied zur Fig. 1 ist der Kabelauslass 5 in einer oberen Ecke 30 der Gehäusewand 19 der Ladesäule 1 vorgesehen. Die obere Ecke 30 liegt benachbart zu einer Außenwand 14 mit einem Abstand a unterhalb des Dachabschnitt 8 der Ladesäule 1. Die Ausbildung des Kabelhalters 20 und seine Länge K ist derart vorgesehen, dass in der dargestellten Parkstellung P der Kabelhalter 20 und das Ladekabel nicht über die Außenwände 13, 14 der Ladesäule 1 überstehen. In Draufsicht auf die Frontwand 9 der Ladesäule 1 liegt in der Parkstellung P der Kabelhalter 20 und das Ladekabel 2 innerhalb der Kontur des Gehäuses 3 der Ladesäule 1. die Verschwenkbarkeit des Kabelhalters 20 am Träger 10 um die aufrechte Verschwenkachse 11 gewährleistet in einer Betriebsstellung Bₙ des Kabelhalters 20 eine große Reichweite. Dieser Reichweite R1_{E} ist in der Betriebsstellung B₁ an einer Außenwand 14 der Ladesäule 1 größer als die Reichweite R2_{E} in der Betriebsstellung n auf der anderen Außenwand 13 der Ladesäule 1. Wie in Fig. 7 dargestellt, ist die Reichweite in der Betriebsstellung Bₙ im Wesentlichen durch die vom Ende 22 des Kabelhalters 20 frei hängende Ladekabel 2 bestimmt. Dennoch ist in einem Halbkreis mit dem Radius R_{E} um die Verschwenkachse 11 eine große Reichweite für das Ladekabel 2 mit dem Ladestecker 4 gewährleistet.

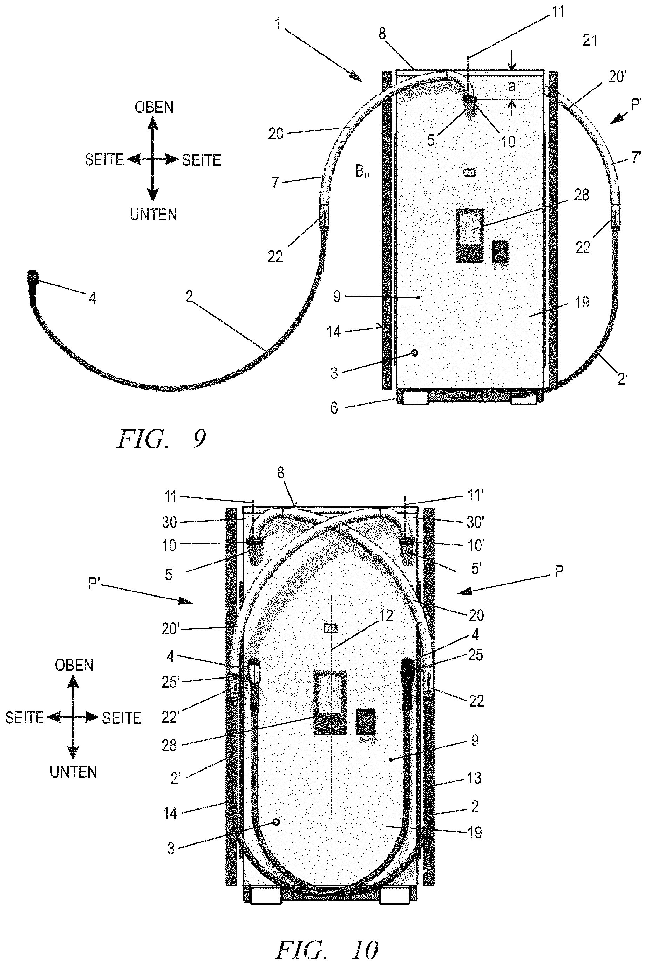

Im Ausführungsbeispiel nach Fig. 9 ist eine Ladesäule 1 gezeigt, deren Grundaufbau der Ladesäule 1 nach Fig. 1 entspricht. In Abweichung von der Ladesäule 1 nach Fig. 1 weist die Ladesäule 1 nach Fig. 9 sowohl auf der vorderen Gehäusewand 19 als auch auf der Rückwand 15 einen Kabelauslass 5 mit einem Träger 10 für den Kabelhalter 20 auf. Sowohl auf der vorderen Gehäusewand 19 als auch auf der Rückwand 15 ist der Kabelauslass 5 mittig mit einem Abstand a unterhalb des Dachabschnitts 8 angeordnet. An der vorderen Gehäusewand 19 ergibt sich dadurch für das Ladekabel 2 bzw. dessen Ladestecker 4 eine Reichweite in einem Halbkreis mit dem Radius R_{M}, wie in Fig. 4 dargestellt. An der Rückwand 15 der Ladesäule 1 ergibt sich in gleicher Weise eine Reichweite für das Ladekabel 2 bzw. dessen Ladestecker 4 in einem Halbkreis mit dem Radius R_{R}, wie in Fig. 4 strichliert dargestellt ist. Der jeweilige Halbkreis ergibt sich aufgrund der Verschwenkbarkeit des Kabelhalters 20 um die aufrechte Verschwenkachse 11.

Im Ausführungsbeispiel nach Fig. 10 sind an der Ladesäule 1 zwei Kabelauslässe 5 und 5' vorgesehen, die beide auf der vorderen Gehäusewand 19 in jeweils einer oberen Ecke 30, 30' angeordnet sind. Der Grundaufbau entspricht der Ladesäule nach dem Ausführungsbeispiel der Fig. 5 bis Fig. 8. Jedem der im Ausführungsbeispiel nach Fig. 10 vorgesehenen Kabelauslässe 5, 5' ist ein Träger 10, 10' zugeordnet. Vorzugsweise ist der Träger 10, 10' unmittelbar am Kabelauslass 5, 5' ausgebildet, insbesondere einteilig mit diesem ausgebildet. Wie die Frontansicht auf die Ladesäule 1 nach Fig. 10 zeigt, können in einer Parkstellung P, P' die Kabelhalter 20, 20' an die vordere Gehäusewand 19 herangeschwenkt werden. So endet der in der Ecke 30 verschwenkbar gehaltene Kabelhalter 20 an der Außenwand 13 des Gehäuses 3 der Ladesäule 1. Das freie Ladekabel 2 wird in einem U-förmigen Bogen bis zur gegenüberliegenden Außenwand 14 geführt und der Ladestecker 4 in einen Steckerhalter 25 eingehängt.

Der an dem anderen Kabelauslass 5' in der anderen Ecke 30' verschwenkbar gehaltene Kabelhalter 20' liegt in seiner Parkstellung P 'ebenfalls an die vordere Gehäusewand 19 herangeschwenkt und endet an der Außenwand 14 der Ladesäule 1. Das sich vom Ende des Kabelhalters 20 bis zum Ladestecker 4 erstreckende freie Ladekabel 2 wird in einem U-förmigen Bogen bis zur gegenüberliegenden Außenwand 14 geführt und der Ladestecker 4 in einen Steckerhalter 25' eingehängt. In der Parkstellung P, P' kreuzen die beiden Kabelhalter 20, 20' einander, wie in der Draufsicht auf die vordere Gehäusewand 19 nach Fig. 10 gezeigt.

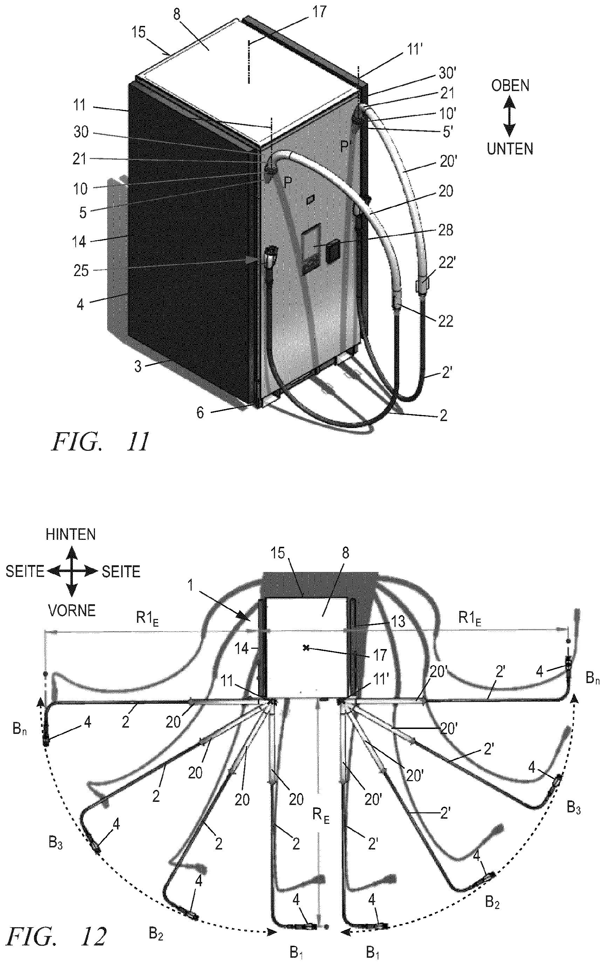

Es kann auch zweckmäßig sein, die in Fig. 11 gezeigten Parkstellungen P, P' vorzusehen, in denen die Kabelhalter 20, 20' von der vorderen Gehäusewand 19 winklig nach vorne abstehenden. In den in Fig. 11 gezeigten Parkstellungen P, P' sind die beiden Ladekabel 2, 2' aus der Parkstellung heraus unabhängig voneinander zu nutzen. Bevorzugt ist auch hier die Länge des freien Ladekabelabschnitts derart bemessen, dass bei in dem Steckerhalter 25 eingehängte Ladestecker 4 das Ladekabel 2 ohne Bodenkontakt von dem freien Ende des Kabelhalters 20, 20' bis zum eingehängt Ladestecker 4 verläuft.

In Fig. 11 sind in der Draufsicht auf die Ladesäule 1 die Reichweiten der Ladekabel 2, 2' schematisch dargestellt. Die Kabelhalter 20, 20' sind um die aufrechten Verschwenkachsen 11, 11' in einem Winkelbereich von 0° bis zu 170° und mehr verschwenkbar. Grundsätzlich hat jedes Ladekabel 2, 2' eine Vielzahl möglicher Betriebsstellungen B₁, B₂, B₃, B₄ ... Bₙ. Die minimal mögliche Reichweite des Ladekabels 2 bzw. 2' entspricht einem Viertelkreis um die Verschwenkachse 11, 11'. Liegt das Ladekabel 2 zum Beispiel in der Betriebsstellung B₃, erweitert sich die mögliche Reichweite des Ladekabels 2' nach der Draufsicht in Darstellung Fig. 12 auf 155°.

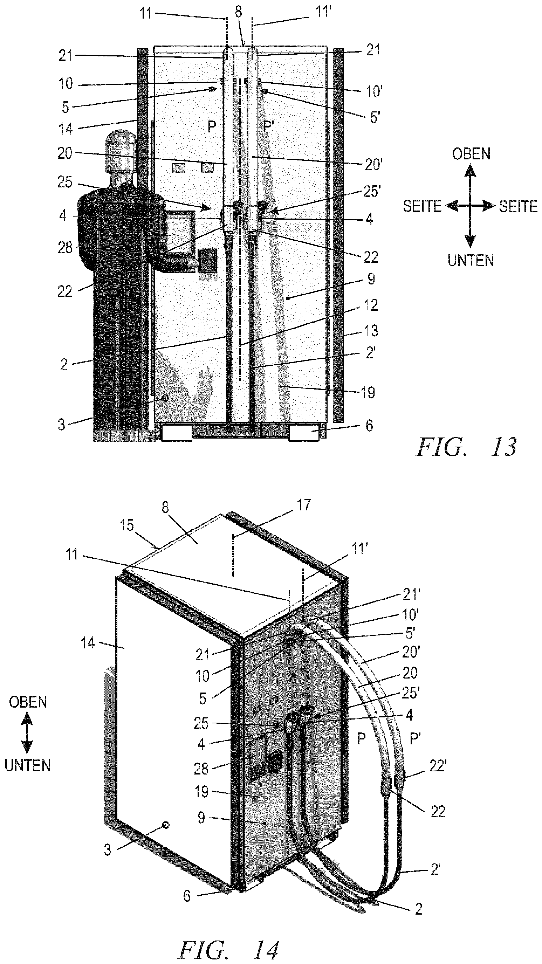

In den Ausführungsbeispielen nach den Fig. 13 bis Fig. 16 sind mehrere Kabelauslässe 5, 5' an einer Ladesäule 1 vorgesehen. Im Unterschied zu den Ausführungsbeispielen nach den Fig. 10 bis Fig. 12 liegen die Kabelauslässe 5, 5' etwa mittig auf der vorderen Gehäusewand 19. Wie Fig. 13 zeigt liegen die Kabelauslässe 5, 5' auf beiden Seiten der Längsmittelachse 12 der vorderen Gehäusewand 19. Die Kabelauslässe 5, 5' entsprechen in ihrer Ausbildung dem im Ausführungsbeispiel nach den Fig. 1 bis Fig. 4 gezeigten Darstellungen. In den Parkstellungen P, P' gemäß den Fig. 13 und Fig. 14 stehen die Kabelhalter 20, 20' in einem Winkel von der vorderen Gehäusewand 19 nach vorne ab. Der Winkel beträgt vorzugsweise 90°. Die an der vorderen Gehäusewand vorgesehenen Steckerhalter 25, 25' liegen auf dem gleichen Höhenniveau wie die Enden 22, 22' der Kabelhalter 20, 20'.

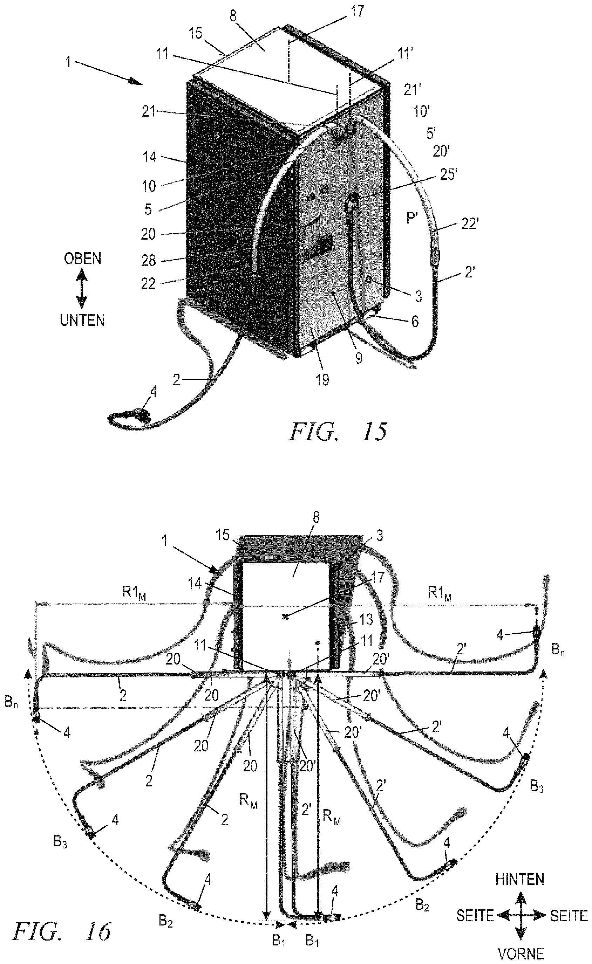

Unabhängig voneinander können die Ladekabel 2, 2' benutzt werden, wie zum Beispiel Fig. 15 zeigt. Grundsätzlich haben aufgrund der Verschwenkbarkeit der Kabelhalter 20, 20' um die Verschwenkachsen 11, 11' beide Ladekabel 2, 2' bzw. deren Ladestecker 4 eine Reichweite in einem Viertelkreis mit dem Radius R_{M}, wie in der Draufsicht nach Fig. 16 dargestellt. Der Viertelkreis der Reichweite des Ladesteckers 4 kann sich abhängig von der Betriebsstellung B₁, B₂, B₃, B₄ ... Bₙ des jeweils anderen Kabelhalters 20, 20' erweitern. Liegt zum Beispiel das Ladekabel 2' bzw. der Kabelhalter 20' in der Betriebsstellung B₂, so erweitert sich die Reichweite des anderen Ladekabels 2 auf einen Kreiswinkel von ca. 125°.

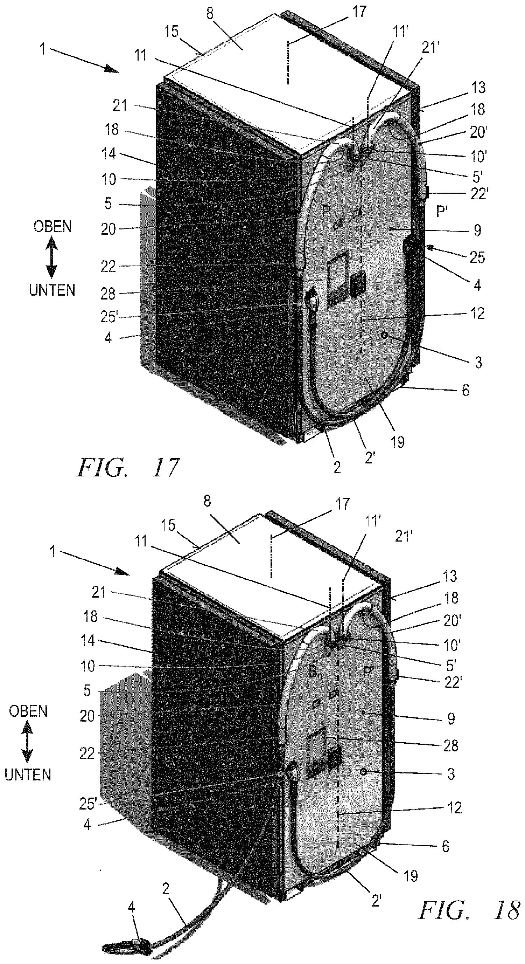

Im Ausführungsbeispiel nach den Fig. 17 bis Fig. 20 weist das Gehäuse 3 der Ladesäule 1 Kabelauslässe 5, 5' in einer Anordnung entsprechend Fig. 13 auf. Im Unterschied zu dem Ausführungsbeispiel nach den Fig. 13 bis Fig. 16 ist der Kabelhalter 20, 20' derart ausgebildet, dass er in der in Fig. 17 gezeigten Parkstellung P, P' - in Draufsicht auf die vordere Gehäusewand 19 gesehen - nicht über die Außenwände 13, 14 übersteht. Der Kabelhalter 20 verläuft somit von der Längsmittelachse 12 in einem Bogen zur Außenwand 14, wobei das Ende 22 des Kabelhalters 20 an der Außenwand 14 des Gehäuses 3 endet. Der aus dem Ende 22 des Kabelhalters 20 austretende freie Ladekabelabschnitt ist in einem Bogen zur gegenüberliegenden Außenwand 13 geführt und mit seinem Ladestecker 4 in einem Steckerhalter 25 gehalten. Der Steckerhalter 25 ist benachbart zur gegenüberliegenden Außenwand 13 des Gehäuses 3 auf der vorderen Gehäusewand 19 vorgesehen. Der Steckerhalter 25 liegt etwa auf dem Höhenniveau des Endes 22 des Kabelhalters 20.

Entsprechend ist der Kabelhalter 20' ausgebildet, dessen Ende 22' an der Außenwand 13 des Gehäuses 3 endet. Der freie Ladekabelabschnitt des Ladekabels 2' tritt aus dem Ende 22' des Kabelhalters 20' aus und ist in einem U-förmigen Bogen zu einem Steckerhalter 25' geführt. Der Steckerhalter 25' liegt etwa auf dem Höhenniveau des Endes 22' des Kabelhalters 20' und nimmt den Ladestecker 4 des Ladekabels 2' auf. Die Länge des freien Ladekabelabschnitts ist jeweils so bemessen, dass das Ladekabel 2, 2' keinen Bodenkontakt hat.

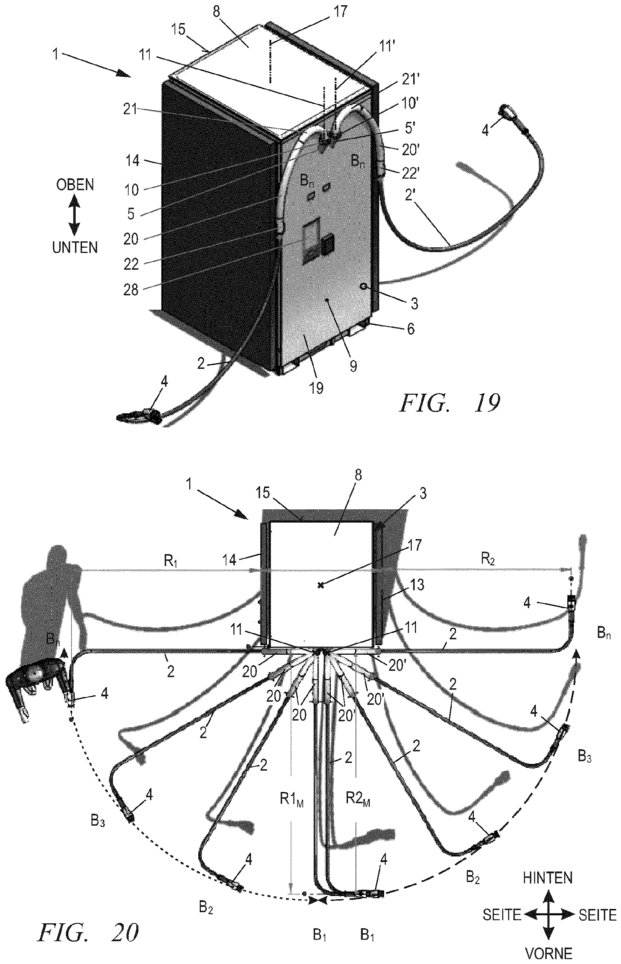

Die Ladekabel 2, 2' können unabhängig voneinander genutzt werden, wobei ihre Reichweite etwa einem Viertelkreis mit einem Radius R1_{M} bzw. R2_{M} entspricht, wie dies in Fig. 20 dargestellt ist. Aufgrund der mittigen Anordnung der Kabelauslässe 5, 5' ist die Reichweite R1 und R2 neben den Außenwänden 13, 14 der Ladesäule 1 gleich. Die Verschwenkbarkeit der Kabelhalter 20, 20' um die aufrechten Verschwenkachsen 11, 11' kann sich gegenseitig beeinflussen. Liegt zum Beispiel der Kabelhalter 20' in einer Betriebsstellung B₃, kann der Kabelhalter 20 um seine Verschwenkachse 11 über einen Verschwenkwinkel von etwa 150° verschwenkt werden, wodurch seine Reichweite entsprechend erweitert ist.

Die Ladekabel 2, 2' können unabhängig voneinander genutzt werden. Wie Fig. 18 zeigt, liegt der Kabelhalter 20' in Parkstellung P' während der andere Kabelhalter 20 in einer Betriebsstellung Bₙ liegt und zum Laden eines mobilen Energiespeichers genutzt werden kann. Eine gleichzeitige Nutzung der Ladekabel 2, 2' ist selbstverständlich auch möglich, wie Fig. 19 zeigt.

Die zu den einzelnen Ausführungsbeispielen Fig. 1 bis Fig. 20 gezeigten Ausbildungen des Kabelauslass 5, des Trägers 10, des Kabelhalters 20, des Kabelrohrs 7, der Führung des Ladekabels 2 am Kabelauslass 5, der Abstand a des Kabelauslass zum Dach der Ladesäule und dergleichen Ausbildungen sind nicht auf das jeweils gezeigte Ausführungsbeispiel beschränkt sondern sind ohne weiteres auf andere Ausführungsbeispiele zu übertragen.

## Patentansprüche

1. Ladesäule mit einem Ladekabel (2) zur Verbindung mit einem mobilen Energiespeicher, wobei die Ladesäule (1) ein Gehäuse (3) aufweist und das Ladekabel (2) über zumindest einen Kabelauslass (5) aus dem Gehäuse (3) der Ladesäule (1) nach außen geführt ist und mit einem Ladestecker (4) endet,
**dadurch gekennzeichnet,**
**dass** das Gehäuse (3) zumindest einen Träger (10) für zumindest einen Kabelhalter (20) aufweist,
**dass** der Kabelhalter (20) um eine aufrechte Verschwenkachse (11) verschwenkbar an dem Träger (10) gehalten ist,
**dass** der Kabelhalter (20) eine Länge (K) aufweist, die geringer ist, als die Länge (L) des aus dem Kabelauslass (5) bis zum Ladestecker (4) sich erstreckenden Ladekabels (2),
**dass** der Kabelhalter (20) steif ausgebildet ist,
und **dass** das Ladekabel (2) durch den Kabelhalter (20) in einem Ladekabelabschnitt (L1) zwangsgeführt und versteift ist.

2. Ladesäule nach Anspruch 1,
**dadurch gekennzeichnet, dass** der Kabelauslass (5) als Träger (10) für den Kabelhalter (20) ausgebildet ist.

3. Ladesäule nach Anspruch 1 oder 2,
**dadurch gekennzeichnet, dass** der Kabelhalter (20) ein erstes Ende (21) und ein zweites Ende (22) aufweist, und dass das erste Ende (21) des Kabelhalters (20) um die aufrechte Verschwenkachse (11) schwenkbar am Träger (10) gehalten ist.

4. Ladesäule nach einem der Ansprüche 1 bis 3,
**dadurch gekennzeichnet, dass** der Kabelhalter (20) ein erstes Ende (21) auf einem ersten Höhenniveau (N1) und ein zweites Ende (22) auf einem zweiten Höhenniveau (N2) aufweist, und das das zweite Höhenniveau (N2) niedriger liegt als das erste Höhenniveau (N1).

5. Ladesäule nach einem der Ansprüche 1 bis 4,
**dadurch gekennzeichnet, dass** der Kabelhalter (20) über seine Länge (K) eine bogenförmige, insbesondere eine C-förmige Gestalt hat.

6. Ladesäule nach einem der Ansprüche 1 bis 5,
**dadurch gekennzeichnet, dass** der Kabelhalter (20) ein Kabelrohr (7) ist, in dem das Ladekabel (2) geführt ist, und das Kabelrohr (7) insbesondere starr ausgebildet ist.

7. Ladesäule nach einem der Ansprüche 1 bis 6,
**dadurch gekennzeichnet, dass** die Ladesäule (1) einen Sockelabschnitt (6) und einen Dachabschnitt (8) aufweist und der Kabelauslass (5) mit dem Träger (10) näher am Dachabschnitt (8) als am Sockelabschnitt (6) des Gehäuses (3) liegt, insbesondere mit einem geringen Abstand (a) zum Dachabschnitt (8) liegt.

8. Ladesäule nach einem der Ansprüche 1 bis 7,
**dadurch gekennzeichnet, dass** die Ladesäule (1) einen Sockelabschnitt (6) und einen Dachabschnitt (8) aufweist, und dass der Kabelauslass (20) mit seiner Auslassöffnung (23) dem Dachabschnitt (8) zugewandt liegt.

9. Ladesäule nach einem der Ansprüche 1 bis 8,
**dadurch gekennzeichnet, dass** ein Kabelauslass (5) mit dem Träger (10) auf der Längsmittelachse (12) einer Gehäusewand (19) des Gehäuses (3) liegt und/oder ein Kabelauslass (5) mit dem Träger (10) in einer oberen Ecke (30) einer Gehäusewand (19) des Gehäuses (3) liegt.

10. Ladesäule nach einem der Ansprüche 1 bis 9,
**dadurch gekennzeichnet, dass** der Kabelhalter (20) um bis zu 180° um die aufrechte Verschwenkachse (11) des Trägers (10) verschwenkbar ist.

11. Ladesäule nach einem der Ansprüche 1 bis 10,
**dadurch gekennzeichnet, dass** der Kabelhalter (20) eine Parkstellung (P) und mehrere Betriebsstellungen (B₁, B₂, B₃, B₄, .... Bₙ) aufweist, und dass der Kabelhalter (20) in der Parkstellung (P) nicht über die Außenwände (13, 14) des Gehäuses (3) der Ladesäule (1) übersteht.

12. Ladesäule nach einem der Ansprüche 1 bis 10,
**dadurch gekennzeichnet, dass** der Kabelhalter (20) eine Parkstellung (P) und mehrere Betriebsstellungen (B₁, B₂, B₃, B₄, .... Bₙ) aufweist, und dass der Kabelhalter (20) in allen Betriebsstellungen (B₁, B₂, B₃, B₄, .... Bₙ) nicht über eine Außenwände (13, 14) des Gehäuses (3) der Ladesäule (1) vorsteht.

13. Ladesäule nach einem der Ansprüche 1 bis 12,
**dadurch gekennzeichnet, dass** auf einer Gehäuseseite (9) der Ladesäule (1) mehrere, insbesondere zwei Kabelauslässe (5, 5') für Ladekabel (2, 2') vorgesehen sind.

14. Ladesäule nach einem der Ansprüche 1 bis 13,
**dadurch gekennzeichnet, dass** auf einer Gehäuseseite (9) der Ladesäule (1) mehrere Kabelauslässe (5, 5') für Ladekabel (2, 2') vorgesehen sind und die mehreren Kabelauslässe (5, 5') auf einer gemeinsamen Höhe liegen.

15. Ladesäule nach einem der Ansprüche 1 bis 14,
**dadurch gekennzeichnet, dass** der vom Kabelhalter (20) zwangsgeführte und versteifte Ladekabelabschnitt (L1) 20 % bis zu 70 %, insbesondere 50 % der zwischen dem Kabelauslass (5) und dem Ladestecker (4) sich erstreckenden Gesamtlänge (L) des Ladekabels (2) beträgt.
